# EUROPEAN PATENT APPLICATION

(11) **EP 2 706 085 A1**
(43) Date of publication of application: **12.03.2014**
(21) Application number: 13183054.9
(22) Date of filing: 05.09.2013
(51) Int. Cl.: C08J 9/10, C09J 7/02

(54) **Ethylene-Propylene-Diene Rubber Foamed Material and Sealing Material**

(30) Priority: 05.09.2012 JP 2012195395; 08.07.2013 JP 2013142715
(71) Applicant: NITTO DENKO CORPORATION, Ibaraki-shi, Osaka 567-8680 (JP)
(72) Inventor: Hirai, Bunta, Osakai, 567-8680, (JP); Kousaka, Takumi, Osaka, 567-8680, (JP)
(74) Representative: Schwabe - Sandmair - Marx

(57) **Abstract**

An ethylene-propylene-diene rubber foamed material is obtained by foaming a rubber composition containing an ethylene-propylene-diene rubber. The rate of change of the 80 % compressive load value CL2 after being heated at 150°C for 10 days to the 80 % compressive load value CL1 before being heated is -50 % or more and 50 % or less, wherein the 80 % compressive load value CL1 before being heated is 0.5 N/cm² or more and 10 N/cm² or less.

## Description

### CROSS-REFERENCE TO RELATED APPLICATION

BACKGROUND OF THE INVENTION

### Field of the Invention

The present invention relates to an ethylene-propylene-diene rubber foamed material and a sealing material, to be specific, to an ethylene-propylene-diene rubber foamed material preferably used as a sealing material for various industrial products and a sealing material including the ethylene-propylene-diene rubber foamed material

### Description of Related Art

As a sealing material for various industrial products, an EPDM foamed material obtained by foaming an ethylene-propylene-diene rubber (hereinafter, may be abbreviated as an EPDM) has been conventionally known.

For example, an EPDM foamed material obtained by foaming an EPDM with a foaming agent and cross-linking the EPDM with a cross-linking agent (a vulcanizing agent) such as sulfur S₈ has been proposed (ref: for example, Japanese Unexamined Patent Publication No. 2006-182796). The EPDM foamed material in Japanese Unexamined Patent Publication No. 2006-182796 has a low resilience and excellent sealing properties.

SUMMARY OF THE INVENTION

In recent years, there may be a case where a sealing material is provided in a member near an engine of a vehicle. In such a case, heat generated from the engine is conducted to the sealing material via the member. In this case, there is a disadvantage that the sealing material is heated at a high temperature for a long time, so that various properties including the sealing properties are easily reduced.

The EPDM in Japanese Unexamined Patent Publication No. 2006-182796, in particular, is cross-linked with the sulfur S₈, so that there is a disadvantage that when the sealing material is exposed to a high temperature atmosphere, as described above, the sulfur S₈ in the form of a straight chain contained in the EPDM foamed material as a cross-linked part is cleaved (cut) and thus, various properties are further easily reduced.

It is an object of the present invention to provide an ethylene-propylene-diene rubber foamed material having excellent flexibility and heat resistance and a sealing material.

An ethylene-propylene-diene rubber foamed material of the present invention is obtained by foaming a rubber composition containing an ethylene-propylene-diene rubber, wherein a rate of change of an 80 % compressive load value CL2 after being heated at 150°C for 10 days to an 80 % compressive load value CL1 before being heated is -50 % or more and 50 % or less and the 80 % compressive load value CL1 before being heated is 0.5 N/cm² or more and 10 N/cm² or less.

In the ethylene-propylene-diene rubber foamed material of the present invention, it is preferable that the content of sulfur calculated by a fluorescent X-ray measurement is 0.7 mass % or less.

In the ethylene-propylene-diene rubber foamed material of the present invention, it is preferable that the apparent density thereof before being heated is 0.50 g/cm³ or less.

In the ethylene-propylene-diene rubber foamed material of the present invention, it is preferable that the rubber composition contains a cross-linking agent and the cross-linking agent does not contain sulfur S₈ and contains a thiuram compound.

In the ethylene-propylene-diene rubber foamed material of the present invention, it is preferable that the mixing ratio of the thiuram compound with respect to 100 parts by mass of the ethylene-propylene-diene rubber is 0.05 parts by mass or more and less than 20 parts by mass.

In the ethylene-propylene-diene rubber foamed material of the present invention, it is preferable that the cross-linking agent further contains a quinoid compound.

In the ethylene-propylene-diene rubber foamed material of the present invention, it is preferable that the quinoid compound is p,p'-dibenzoylquinonedioxime.

In the ethylene-propylene-diene rubber foamed material of the present invention, it is preferable that the mixing ratio of the p,p'-dibenzoylquinonedioxime with respect to 100 parts by mass of the ethylene-propylene-diene rubber is 0.05 parts by mass or more and 10 parts by mass or less.

A sealing material of the present invention includes the above-described ethylene-propylene-diene rubber foamed material and a pressure-sensitive adhesive layer provided on one surface or both surfaces of the ethylene-propylene-diene rubber foamed material.

The EPDM foamed material of the present invention is obtained by foaming the rubber composition containing the EPDM and the rate of change of the 80 % compressive load value CL2 after being heated at 150°C for 10 days to the 80 % compressive load value CL1 before being heated is within a specific range, so that the EPDM foamed material has excellent heat resistance.

Additionally, the 80 % compressive load value CL1 before being heated is within a specific range, so that the EPDM foamed material has excellent flexibility and excellent sealing properties.

As a result, the EPDM foamed material has excellent flexibility and is capable of surely sealing a member when exposed to a high temperature atmosphere.

The sealing material of the present invention includes the above-described ethylene-propylene-diene rubber foamed material, so that a gap between members is capable of being surely filled with the ethylene-propylene-diene rubber foamed material.

### BRIEF DESCRIPTION OF THE DRAWINGS

FIG. 1 shows a schematic configuration view for illustrating one embodiment of an EPDM foamed material of the present invention.
FIG. 2 shows a schematic sectional view for illustrating an evaluation method of sound absorbency.

### DETAILED DESCRIPTION OF THE INVENTION

An EPDM foamed material of the present invention is obtained by foaming a rubber composition containing an EPDM.

The EPDM is a rubber obtained by copolymerization of ethylene, propylene, and dienes. The further copolymerization of the dienes, in addition to the ethylene and the propylene, allows introduction of an unsaturated bond and enables cross-linking with a cross-linking agent (described later).

Examples of the dienes include 5-ethylidene-2-norbornene, 1,4-hexadiene, and dicyclopentadiene. These dienes can be used alone or in combination of two or more.

The content (the diene content) of the dienes in the EPDM is, for example, 1 mass % or more, preferably 2 mass % or more, or more preferably 3 mass % or more, and is, for example, 20 mass % or less, or preferably 15 mass % or less.

When the content of the dienes is not less than the above-described lower limit, surface shrinkage of the EPDM foamed material is capable of being prevented. When the content of the dienes is not more than the above-described upper limit, occurrence of a crack in the EPDM foamed material is capable of being prevented.

A preferable example of the EPDM includes an EPDM having long chain branching.

A method for introducing a long branched chain into the EPDM is not particularly limited and a known method is used.

To be specific, the EPDM is produced with, for example, a catalyst such as a Ziegler-Natta catalyst or a metallocene catalyst. Preferably, in view of obtaining a long branched chain, the EPDM is produced with a metallocene catalyst.

When the EPDM has long chain branching, the elongational viscosity is increased due to the entanglement of the side chain, so that the rubber composition is capable of being excellently foamed and having flexibility.

The rubber composition preferably contains a cross-linking agent and/or a foaming agent.

The cross-linking agent contains a thiuram compound.

An example of the thiuram compound includes a thiuram sulfide shown by the following general formula (1).

General Formula (1):

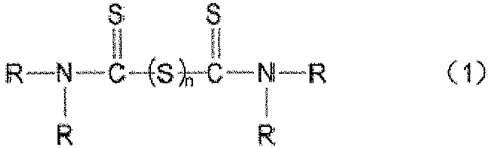

(where, in formula, Rs may be the same or different from each other and R represents a hydrogen atom or a monovalent hydrocarbon group. "n" represents an integer of 1 or more and 7 or less.)

An example of the monovalent hydrocarbon group represented by R includes a hydrocarbon group such as an aliphatic group, an alicyclic group, an aromatic aliphatic group, and an aromatic group.

An example of the aliphatic group includes an alkyl group having 1 to 10 carbon atoms such as methyl, ethyl, propyl, isopropyl, n-butyl, isobutyl, hexyl, heptyl, and 2-ethylhexyl. An example of the alicyclic group includes a cycloalkyl group having 4 to 20 carbon atoms such as cyclobutyl, cyclopentyl, and cyclohexyl. An example of the aromatic aliphatic group includes an aralkyl group having 7 to 20 carbon atoms such as benzyl and phenylethyl. An example of the aromatic group includes an aryl group having 6 to 20 carbon atoms such as phenyl, xylyl, and naphthyl.

Preferably, all of the four Rs are the same.

"n" is preferably an integer of 4 or less, more preferably an integer of 3 or less, or most preferably 2.

To be specific, an example of the thiuram sulfide includes an aliphatic group-containing thiuram disulfide such as tetramethylthiuram disulfide (TMT), tetraethylthiuram disulfide (TET), tetrabutylthiuram disulfide (TBT), and tetrakis(2-ethylhexyl)thiuram disulfide (TOT-N). An example of the thiuram sulfide also includes an aromatic aliphatic (aralkyl) group-containing thiuram disulfide such as tetrabenzylthiuram disulfide (TBZTD). Furthermore, examples thereof also include an aliphatic group-containing thiuram monosulfide such as tetramethylthiuram monosulfide (TS), an aliphatic group-containing thiuram tetrasulfide such as dipentamethylenethiuram tetrasulfide (TRA), and an aliphatic group-containing thiuram hexasulfide such as dipentamethylenethiuram hexasulfide.

These thiuram compounds can be used alone or in combination of two or more.

As the thiuram compound, preferably, thiuram disulfide is used, or more preferably, an aromatic aliphatic (aralkyl) group-containing thiuram disulfide is used.

The mixing ratio of the thiuram compound with respect to 100 parts by mass of the EPDM is, for example, 0.05 parts by mass or more, preferably 0.1 parts by mass or more, more preferably 0.5 parts by mass or more, further more preferably 1.0 part by mass or more, or particularly preferably 2.0 parts by mass or more, and is, for example, less than 20 parts by mass, preferably 15 parts by mass or less, more preferably 10 parts by mass or less, or further more preferably 5 parts by mass or less.

The mixing ratio of the thiuram compound in the cross-linking agent is, for example, 100 mass % or less, preferably 99 mass % or less, more preferably 90 mass % or less, or further more preferably 75 mass % or less, and is, for example, 1 mass % or more, preferably 25 mass % or more, more preferably 60 mass % or more, or further more preferably 65 mass % or more.

When the mixing proportion of the thiuram compound is below the above-described upper limit, the EPDM is capable of being efficiently foamed. On the other hand, when the mixing proportion of the thiuram compound is above the above-described lower limit, the EPDM is capable of being sufficiently cross-linked with the thiuram compound.

The cross-linking agent can preferably contain a quinoid compound. That is, as the cross-linking agent, the thiuram compound and the quinoid compound can be used in combination.

The quinoid compound is an organic compound (a quinoid-based cross-linking agent) having a quinoid structure. Examples thereof include p-quinonedioxime, poly-p-dinitrosobenzene, and a derivative thereof. To be specific, an example of the derivative of the p-quinonedioxime includes p,p'-dibenzoylquinonedioxime.

These quinoid compounds can be used alone or in combination of two or more.

As the quinoid compound, preferably, a derivative of p-quinonedioxime is used, or more preferably, p,p'-dibenzoylquinonedioxime is used.

By allowing the quinoid compound to be contained in the cross-linking agent, a tensile strength HT1 (described later) of the EPDM foamed material is capable of being improved.

The mixing ratio of the quinoid compound with respect to 100 parts by mass of the EPDM is, for example, 0.05 parts by mass or more, preferably 0.5 parts by mass or more, or more preferably 1 part by mass or more, and is, for example, 20 parts by mass or less, preferably 10 parts by mass or less, or more preferably 5 parts by mass or less. Among all, when the quinoid compound is p,p'-dibenzoylquinonedioxime, the mixing ratio thereof with respect to 100 parts by mass of the EPDM is, for example, 0.05 parts by mass or more, and is preferably 10 parts by mass or less, or more preferably 5 parts by mass or less.

The mixing ratio of the quinoid compound with respect to 100 parts by mass of the thiuram compound is, for example, 250 parts by mass or less, preferably 100 parts by mass or less, or more preferably 60 parts by mass or less, and is, for example, 1 part by mass or more, or preferably 5 parts by mass or more. The mixing ratio of the quinoid compound with respect to the cross-linking agent is, for example, less than 75 parts by mass, or preferably less than 50 parts by mass, and is, for example, 1 part by mass or more, or preferably 25 parts by mass or more.

When the mixing proportion of the quinoid compound is within the above-described range, the tensile strength HT1 of the EPDM foamed material is capable of being further improved.

Furthermore, an organic peroxide can be added to the cross-linking agent as required. Examples thereof include dicumyl peroxide, dimethyl di(t-butylperoxy)hexane, 1,1-di(t-butylperoxy)cyclohexane, and α,α'-di(t-butylperoxy)diisopropyl benzene. The addition ratio of the organic peroxide, for example, with respect to 100 parts by mass of the above-described thiuram compound is, for example, 10 parts by mass or less, or preferably 0.1 parts by mass or less.

The cross-linking agent does not contain sulfur (including S₈), while containing a thiuram compound and furthermore, containing a quinoid compound and/or an organic peroxide as required.

The cross-linking agent does not contain sulfur and contains at least a thiuram compound, so that the cross-linking of a sulfur atom S caused by the thiuram compound is capable of being imparted to the EPDM instead of the cross-linking of the sulfur S₈.

In the EPDM foamed material, a cross-linked part (-S-) based on a sulfur atom (S) having a relatively short chain length of the thiuram compound is formed instead of a cross-linked part (a vulcanized part, to be specific, -S₈- or the like) of the sulfur (S₈) having a relatively long chain length and when the EPDM foamed material is exposed to a high temperature atmosphere, a change of the properties (a compressive load value to be described later and the like) based on cleavage (cutting) of the cross-linked part of the sulfur (-S₈-) is capable of being suppressed.

Examples of the foaming agent include an organic foaming agent and an inorganic foaming agent.

Examples of the organic foaming agent include an azo foaming agent such as azodicarbonamide (ADCA), barium azodicarboxylate, azobisisobutylonitrile (AIBN), azocyclohexylnitrile, and azodiaminobenzene; N-Nitroso foaming agent such as N,N'-dinitrosopentamethylenetetramine (DTP), N,N'-dimethyl-N,N'-dinitrosoterephthalamide, and trinitrosotrimethyltriamine; a hydrazide foaming agent such as 4,4'-oxybis(benzenesulfonylhydrazide) (OBSH), paratoluenesulfonylhydrazide, diphenylsulfone-3,3'-disulfonylhydrazide, 2,4-toluenedisulfonylhydrazide, p,p-bis(benzenesulfonylhydrazide)ether, benzene-1,3-disulfonylhydrazide, and allylbis(sulfonylhydrazide); a semicarbazide foaming agent such as p-toluylenesulfonylsemicarbazide and 4,4'-oxybis(benzenesulfonylsemicarbazide); a fluorinated alkane foaming agent such as trichloromonofluoromethane and dichloromonofluoromethane; a triazole-based foaming agent such as 5-morpholyl-1,2,3,4-thiatriazole; and other known organic foaming agents. Also, an example of the organic foaming agent includes thermally expansive microparticles in which a heat-expandable substance is encapsulated in a microcapsule. An example of the thermally expansive microparticles can include a commercially available product such as Microsphere (trade name, manufactured by Matsumoto Yushi-Seiyaku Co., Ltd.).

Examples of the inorganic foaming agent include hydrogencarbonate such as sodium hydrogen carbonate and ammonium hydrogen carbonate; carbonate such as sodium carbonate and ammonium carbonate; nitrite such as sodium nitrite and ammonium nitrite; borohydride salt such as sodium borohydride; azides; and other known inorganic foaming agents. Preferably, an azo foaming agent is used. These foaming agents can be used alone or in combination of two or more.

The mixing ratio of the foaming agent with respect to 100 parts by mass of the EPDM is, for example, 0.1 parts by mass or more, or preferably 1 part by mass or more, and is, for example, 50 parts by mass or less, or preferably 30 parts by mass or less.

More preferably, the rubber composition contains a cross-linking accelerator, a cross-linking auxiliary, and a foaming auxiliary.

Examples of the cross-linking accelerator include thiourea, N,N'-diethylthiourea (1,3-diethylthiourea), N,N'-dibutylthiourea (1,3-dibutylthiourea), 2-mercaptoimidazoline (ethylenethiourea), and trimethylthiourea. Preferably, a thiourea-based cross-linking accelerator such as N,N'-diethylthiourea and N,N'-dibutylthiourea is used.

These cross-linking accelerators can be used alone or in combination of two or more. Preferably, N,N'-diethylthiourea or N,N'-dibutylthiourea is used alone.

By allowing the cross-linking accelerator to be contained in the rubber composition, the cross-linking can be accelerated with the cross-linking agent containing the thiuram compound.

The mixing ratio of the cross-linking accelerator with respect to 100 parts by mass of the EPDM is, for example, 0.01 parts by mass or more, preferably 0.1 parts by mass or more, more preferably 0.5 parts by mass or more, or further more preferably 1 part by mass or more, and is, for example, 20 parts by mass or less, preferably 10 parts by mass or less, or more preferably 4 parts by mass or less. The mixing ratio of the cross-linking accelerator with respect to 100 parts by mass of the cross-linking agent is, for example, 1 part by mass or more, preferably 2 parts by mass or more, or more preferably 5 parts by mass or more, and is, for example, 100 parts by mass or less, preferably 80 parts by mass or less, or more preferably 60 parts by mass or less.

When the mixing proportion of the cross-linking accelerator is within the above-described range, the cross-linking with the cross-linking agent containing the thiuram compound is capable of being further accelerated.

Examples of the cross-linking auxiliary include a metal oxide such as zinc oxide, fatty acids such as stearic acid and esters thereof, and a metal soap such as zinc stearate.

As the cross-linking auxiliary, preferably, a metal oxide and fatty acids are used.

These cross-linking auxiliaries can be used alone or in combination of two or more. Preferably, a metal oxide and fatty acids are used in combination.

The mixing ratio (when a metal oxide and fatty acids are used in combination, the ratio of the total amount thereof) of the cross-linking auxiliary with respect to 100 parts by mass of the EPDM is, for example, 0.01 parts by mass or more, preferably 0.1 parts by mass or more, or more preferably 1 part by mass or more, and is, for example, 20 parts by mass or less, preferably 15 parts by mass or less, or more preferably 10 parts by mass or less.

The mixing ratio of the cross-linking auxiliary with respect to 100 parts by mass of the cross-linking agent is, for example, 10 parts by mass or more, preferably 25 parts by mass or more, or more preferably 50 parts by mass or more, and is, for example, 1000 parts by mass or less, preferably 500 parts by mass or less, more preferably 250 parts by mass or less, or further more preferably 170 parts by mass or less.

When the metal oxide and the fatty acids are used in combination, the mixing ratio of the fatty acids with respect to 100 parts by mass of the metal oxide is, for example, 10 parts by mass or more, or preferably 30 parts by mass or more, and is, for example, 200 parts by mass or less, preferably 100 parts by mass or less, or more preferably 70 parts by mass or less.

Examples of the foaming auxiliary include a urea foaming auxiliary, a salicylic acid foaming auxiliary, and a benzoic acid foaming auxiliary. Preferably, a urea foaming auxiliary is used.

These foaming auxiliaries can be used alone or in combination of two or more.

The mixing ratio of the foaming auxiliary with respect to 100 parts by mass of the EPDM is, for example, 0.5 parts by mass or more, or preferably 1 part by mass or more, and is, for example, 20 parts by mass or less, or preferably 10 parts by mass or less. The mixing ratio of the foaming auxiliary with respect to 100 parts by mass of the foaming agent is, for example, 10 parts by mass or more, or preferably 20 parts by mass or more, and is, for example, 100 parts by mass or less, preferably 50 parts by mass or less, or more preferably 30 parts by mass or less.

The rubber composition can appropriately contain a filler, a softener, an oxidation inhibitor, or the like as required.

Examples of the filler include an inorganic filler such as calcium carbonate (including heavy calcium carbonate), magnesium carbonate, silicic acid and salts thereof, clay, talc, mica powders, bentonite, silica, alumina, aluminum silicate, aluminum powders, and carbon black; an organic filler such as cork; and other known fillers. The average particle size of the filler is, for example, 0.1 µm or more and 100 µm or less. These fillers can be used alone or in combination of two or more. The mixing ratio of the filler with respect to 100 parts by mass of the EPDM is, for example, 10 parts by mass or more, preferably 30 parts by mass or more, or more preferably 50 parts by mass or more, and is, for example, 300 parts by mass or less, or preferably 250 parts by mass or less.

Examples of the softener include petroleum oils (for example, paraffinic oil (including paraffinic process oil), naphthenic oil (including naphthenic process oil), drying oils and animal and vegetable oils (for example, linseed oil), and aromatic oil); asphalts; low molecular weight polymers; and organic acid esters (for example, phthalic ester (for example, di-2-ethylhexyl phthalate (DOP) and dibutyl phthalate (DBP)), phosphate ester, higher fatty acid ester, and alkyl sulfonate ester). Preferably, petroleum oils are used, or more preferably, paraffinic oil is used. These softeners can be used alone or in combination of two or more. The mixing ratio of the softener with respect to 100 parts by mass of the EPDM is, for example, 5 parts by mass or more, or preferably 10 parts by mass or more, and is, for example, 100 parts by mass or less, or preferably 50 parts by mass or less.

An example of the oxidation inhibitor includes a secondary amine compound (an aromatic secondary amine compound and the like) such as 4,4'-bis(α,α-dimethylbenzyl)diphenylamine and N,N'-di-2-naphthyl-p-phenylenediamine. These oxidation inhibitors can be used alone or in combination. The mixing ratio of the oxidation inhibitor with respect to 100 parts by mass of the EPDM is, for example, 0.05 parts by mass or more, or preferably 0.1 parts by mass or more, and is, for example, 20 parts by mass or less, preferably 10 parts by mass or less, or more preferably 5 parts by mass or less.

Furthermore, the rubber composition can contain a known additive at an appropriate proportion as long as it does not damage the excellent effect of the EPDM foamed material to be obtained in accordance with its purpose and use. Examples of the known additive include a polymer other than the EPDM, a flame retardant, a plasticizer, a tackifier, an antioxidant, a colorant, and a fungicide.

On the other hand, preferably, the rubber composition does not contain a cross-linking retardant (a vulcanizing retardant) such as thiazoles and dithiocarbamates.

Thus, the EPDM foamed material has excellent heat resistance and is capable of suppressing a change of the properties caused by exposure under a high temperature atmosphere.

When the rubber composition does not contain the above-described cross-linking retardant, the content proportion of the sulfur atom S of the EPDM foamed material is capable of being reduced and a reduction of the corrosive properties can be achieved.

Next, a method for producing the EPDM foamed material is described.

In order to produce the EPDM foamed material, first, the above-described components are blended to be kneaded using a kneader, a mixer, a mixing roller, or the like, so that the rubber composition is prepared as a kneaded material (a kneading step).

In the kneading step, the components can be also kneaded, while being appropriately heated. Also, in the kneading step, for example, components other than a cross-linking agent, a cross-linking auxiliary, a foaming agent, and a foaming auxiliary are first kneaded to prepare a first kneaded material. Thereafter, a cross-linking agent, a cross-linking auxiliary, a foaming agent, and a foaming auxiliary are added to the first kneaded material to be kneaded, so that the rubber composition (a second kneaded material) can be obtained.

The obtained rubber composition (the kneaded material) is extruded into a sheet shape or the like using an extruder (a molding step) and the extruded rubber composition is heated to be foamed (a foaming step).

A heat condition is appropriately selected in accordance with a cross-linking starting temperature of the cross-linking agent to be blended, a foaming temperature of the foaming agent to be blended, or the like. The rubber composition is preheated using, for example, an oven with internal air circulation, at, for example, 40°C or more, or preferably 60°C or more, and at, for example, 200°C or less, or preferably 160°C or less for, for example, 1 minute or more, or preferably 5 minutes or more, and for, for example, 60 minutes or less, or preferably 40 minutes or less. After the preheating, the rubber composition is heated at, for example, 450°C or less, preferably 350°C or less, or more preferably 250°C or less, and at, for example, 100°C or more, or preferably 120°C or more for, for example, 5 minutes or more, or preferably 15 minutes or more, and for, for example, 80 minutes or less, or preferably 50 minutes or less.

According to the method for producing the EPDM foamed material, the EPDM foamed material capable of sealing a gap between the members with excellent adhesiveness and excellent followability to irregularities is capable of being easily and surely produced.

The obtained rubber composition is extruded into a sheet shape using an extruder, while being heated (a molding step) (that is, a rubber composition sheet is fabricated) and the rubber composition in a sheet shape (the rubber composition sheet) can be continuously cross-linked and foamed (a foaming step).

According to this method, the EPDM foamed material is capable of being produced with excellent production efficiency.

In this way, the rubber composition is foamed and cross-linked, so that the EPDM foamed material is capable of being obtained.

According to the method for producing the EPDM foamed material, the EPDM foamed material in a desired shape is capable of being easily and surely produced with excellent production efficiency.

The obtained EPDM foamed material has a thickness of, for example, 0.1 mm or more, or preferably 1 mm or more, and of, for example, 50 mm or less, or preferably 45 mm or less.

The EPDM foamed material has, for example, an open cell structure (an open cell ratio of 100 %) or a semi-open/semi-closed cell structure (an open cell ratio of, for example, above 0 %, or preferably 10 % or more, and of, for example, less than 100 %, or preferably 98 % or less). Preferably, the EPDM foamed material has a semi-open/semi-closed cell structure.

When the EPDM foamed material has a semi-open/semi-closed cell structure, the improvement of the flexibility and moreover, the sound absorbency can be achieved and furthermore, the improvement of the filling properties of the EPDM foamed material in a gap between the members can be achieved.

The EPDM foamed material obtained in this way has a volume expansion ratio (a density ratio before and after foaming) of, for example, two times or more, or preferably five times or more, and of, for example, 30 times or less.

The EPDM foamed material has an 80 % compressive load value CL1 of 0.5 N/cm² or more, and of 10 N/cm² or less, preferably 5.0 N/cm² or less, or more preferably 2.5 N/cm² or less.

The 80 % compressive load value CL1 of the EPDM foamed material refers to an 80 % compressive load value "before" a test of "heating at 150°C for 10 days" to be described next.

When the 80 % compressive load value CL1 of the EPDM foamed material is not less than the above-described lower limit, the flexibility of the EPDM foamed material can be improved and thus, the adhesiveness to a member and the followability to irregularities can be improved. On the other hand, when the 80 % compressive load value CL1 of the EPDM foamed material is not more than the above-described upper limit, the improvement of the flexibility is possible and a deformation of a casing (a member) can be prevented.

On the other hand, in the EPDM foamed material, a rate of change R_{CL} (= [(CL2-CL1) / CL1] × 100) of an 80 % compressive load value CL2 after being heated at 150°C for 10 days to the above-described 80 % compressive load value CL1 before being heated is, -50 % or more, preferably -20 % or more, more preferably -10 % or more, or further more preferably -5 % or more, and is 50 % or less, preferably 20 % or less, more preferably 10 % or less, or further more preferably 5 % or less.

When the rate of change R_{CL} before and after the heating of the 80 % compressive load value of the EPDM foamed material is below the above-described lower limit or is above the above-described upper limit, the heat resistance may be reduced.

The 80 % compressive load value CL (including CL1 and CL2) of the EPDM foamed material is measured in conformity with JIS K 6767 (1999).

The EPDM foamed material has an apparent density BD1 of, for example, 0.50 g/cm³ or less, preferably 0.20 g/cm³ or less, or more preferably 0.10 g/cm³ or less, and of, for example, 0.01 g/cm³ or more.

The apparent density BD1 of the EPDM foamed material refers to an apparent density "before" a test of "heating at 150°C for 10 days" to be described next.

When the apparent density BD1 of the EPDM foamed material is within the above-described range, the EPDM foamed material is capable of excellently sealing a gap between the members.

On the other hand, in the EPDM foamed material, a rate of change R_{BD} (= [(BD2-BD1) / BD1] × 100) of an apparent density BD2 after being heated at 150°C for 10 days to the above-described apparent density BD1 before being heated is, for example, -10 % or more, preferably -5 % or more, more preferably -2.5 % or more, or further more preferably -1 % or more, and is, for example, 10 % or less, preferably 5 % or less, more preferably 2.5 % or less, or further more preferably 1 % or less.

When the rate of change R_{BD} before and after the heating of the apparent density of the EPDM foamed material is not less than the above-described lower limit and is not more than the above-described upper limit, the EPDM foamed material has excellent heat resistance and the sealing properties thereof with respect to a member are capable of being improved.

The apparent density BD (including BD1 and BD2) of the EPDM foamed material is measured in conformity with JIS K 6767 (1999).

The EPDM foamed material has an elongation E1 of, for example, 10 % or more, or preferably 150 % or more, and of, for example, 1500 % or less, or preferably 1000 % or less.

The elongation E1 of the EPDM foamed material refers to an elongation "before" a test of "heating at 150°C for 10 days" to be described next.

On the other hand, in the EPDM foamed material, a rate of change R_{E} (= [(E2-E1) / E1] × 100) of an elongation E2 after being heated at 150°C for 10 days to the above-described elongation E1 before being heated is, for example, -50 % or more, preferably -40 % or more, more preferably -30 % or more, further more preferably -20 % or more, or particularly preferably -15 % or more, and is, for example, 10 % or less, or preferably 0 % or less.

When the rate of change R_{E} before and after the heating of the elongation of the EPDM foamed material is not less than the above-described lower limit and is not more than the above-described upper limit, the EPDM foamed material has excellent heat resistance and under a high temperature use, the sealing properties with respect to a member and the strength of the EPDM foamed material itself are capable of being retained.

The elongation E (including E1 and E2) of the EPDM foamed material is measured as a breaking elongation in conformity with JIS K 6767 (1999).

The EPDM foamed material has a tensile strength HT1 of, for example, 1.0 N/cm² or more, or preferably 2.0 N/cm² or more, and of, for example, 50 N/cm² or less, preferably 30.0 N/cm² or less, more preferably 10 N/cm² or less, further more preferably 8 N/cm² or less, or particularly preferably 6 N/cm² or less.

The tensile strength HT1 of the EPDM foamed material refers to a tensile strength "before" a test of "heating at 150°C for 10 days" to be described next.

On the other hand, in the EPDM foamed material, a rate of change R_{HT} (= [(HT2-HT1) / HT1 × 100) of a tensile strength HT2 after being heated at 150°C for 10 days to the above-described tensile strength HT1 before being heated is, for example, -10 % or more, or preferably 0 % or more, and is, for example, 60 % or less, preferably 50 % or less, more preferably 40 % or less, further more preferably 30 % or less, or particularly preferably 20 % or less.

When the rate of change R_{HT} before and after the heating of the tensile strength of the EPDM foamed material is not less than the above-described lower limit and furthermore, is not more than the above-described upper limit, the EPDM foamed material has excellent heat resistance and under a high temperature use, the sealing properties with respect to a member and the strength of the EPDM foamed material itself are capable of being retained.

The tensile strength HT (including HT1 and HT2) of the EPDM foamed material is measured as a maximum load in a tensile test in conformity with JIS K 6767 (1999).

The EPDM foamed material has an average cell size CS 1 of, for example, 50 µm or more, preferably 100 µm or more, more preferably 150 µm or more, further more preferably 200 µm or more, particularly preferably 250 µm or more, or most preferably 300 µm or more, and is, for example, 1000 µm or less, preferably 800 µm or less, or more preferably 600 µm or less.

The average cell size CS 1 of the EPDM foamed material refers to an average cell size "before" a test of "heating at 150°C for 10 days" to be described next.

When the average cell size of the EPDM foamed material is not less than the above-described lower limit, a sound wave (a wavelength of, for example, 50 to 2000 nm) easily enters the inside of a cell and thus, the sound absorbency of the EPDM foamed material is capable of being improved. On the other hand, when the average cell size of the EPDM foamed material is not more than the above-described upper limit, the sealing properties with respect to a gap of an object to absorb sound is capable of being improved.

On the other hand, in the EPDM foamed material, a rate of change R_{CS} (= [(CS2-CS1) / CS1] × 100) of an average cell size CS2 after being heated at 150°C for 10 days to the above-described average cell size CS1 before being heated is, for example, -50 % or more, preferably -25 % or more, or more preferably -10 % or more, and is, for example, 50 % or less, preferably 25 % or less, or more preferably 10 % or less.

When the rate of change R_{CS} before and after the heating of the average cell size of the EPDM foamed material is not less than the above-described lower limit and is not more than the above-described upper limit, the EPDM foamed material has excellent heat resistance and the sealing properties with respect to a member and the sound absorbency are capable of being improved.

The calculation method of the average cell size CS (including CS1 and CS2) of the EPDM foamed material is described in detail in Examples to be described later.

In the EPDM foamed material, a sound absorption coefficient AC1 at normal incidence measured at a wavelength of 1500 Hz in conformity with "Acoustics-Determination of sound absorption coefficient-Part 1: Method using standing wave ratio (JIS A 1405-1: 1996)" that is evaluated in Examples to be described later is, for example, 25 % or more, preferably 50 % or more, or more preferably 60 % or more, and is, for example, 100 % or less. The measurement method of a peak value of the sound absorption coefficient AC1 at normal incidence is described in detail in Examples to be described later.

On the other hand, in the EPDM foamed material, a rate of change R_{AC} (= [(AC2-AC1) / AC1] × 100) of a sound absorption coefficient AC2 at normal incidence after being heated at 150°C for 10 days to the above-described sound absorption coefficient AC1 at normal incidence before being heated is, for example, -50 % or more, preferably -25 % or more, or more preferably -10 % or more, and is, for example, 50 % or less, preferably 25 % or less, or more preferably 10 % or less.

When the rate of change R_{AC} before and after the heating of the sound absorption coefficient at normal incidence of the EPDM foamed material is not less than the above-described lower limit and is not more than the above-described upper limit, the EPDM foamed material has excellent heat resistance and the sealing properties with respect to a member and the sound absorbency are capable of being improved.

The content ratio of the sulfur atom S of the EPDM foamed material is, on the mass basis, for example, 0.7 mass % or less, preferably 0.5 mass % or less, or more preferably 0.4 mass % or less.

The content proportion of the sulfur atom S of the EPDM foamed material is calculated by a fluorescent X-ray measurement. The detailed conditions in the fluorescent X-ray measurement is described in detail in Examples to be described later.

When the content proportion of the sulfur atom S of the EPDM foamed material is not more than the above-described upper limit, the corrosive properties of the EPDM foamed material with respect to an object to be sealed are capable of being reduced. To be specific, the corrosive properties with respect to a member that comes into contact with or is disposed near the EPDM foamed material are capable of being reduced.

The use of the EPDM foamed material is not particularly limited and the EPDM foamed material can be used as, for example, a vibration-proof material, a sound absorbing material, a sound insulation material, a dust-proof material, a heat insulating material, a buffer material, or a water-stop material, which fills a gap between various members for the purpose of, for example, damping, sound absorption, sound insulation, dust-proof, heat insulation, buffering, or water tight.

Among all, when the sound absorption coefficient AC1 at normal incidence is within the above-described range, the EPDM foamed material has excellent sound absorbency, so that the EPDM foamed material is preferably used as a sound absorbing material. Furthermore, when the rate of change R_{AC} before and after the heating of the sound absorption coefficient at normal incidence of the EPDM foamed material is within the above-described range, the EPDM foamed material is preferably used as a sound absorbing material having excellent heat resistance.

The EPDM foamed material is obtained by foaming the rubber composition containing the EPDM and the rate of change R_{CL} of the 80 % compressive load value CL2 after being heated at 150°C for 10 days to the 80 % compressive load value CL1 before being heated is within a specific range, so that the EPDM foamed material has excellent heat resistance.

Thus, an example of the member in which the EPDM foamed material is provided includes a member that is made of a metal such as iron, steel, stainless steel, or aluminum; is, for example, disposed around an engine of a vehicle; and is exposed to a high temperature atmosphere of, for example, 100°C or more, furthermore 110°C or more, or furthermore 120°C or more, and of, for example, 150°C or less.

The EPDM foamed material has excellent heat resistance, has excellent adhesiveness and followability to irregularities, and is capable of sealing a gap between the members, so that it can be preferably used as a sealing material.

Furthermore, in the EPDM foamed material, the corrosive properties are reduced, so that the corrosion of the above-described member in which the EPDM foamed material is provided is capable of being suppressed.

Examples of the member in which the EPDM foamed material is used as a sealing material include a vehicle and an electric/electronic device.

In order to use the EPDM foamed material for a sealing material, for example, a sealing material in which a pressure-sensitive adhesive layer for attaching the EPDM foamed material is provided on the surface of the EPDM foamed material is prepared. That is, a sealing material that includes the EPDM foamed material and the pressure-sensitive adhesive layer is prepared.

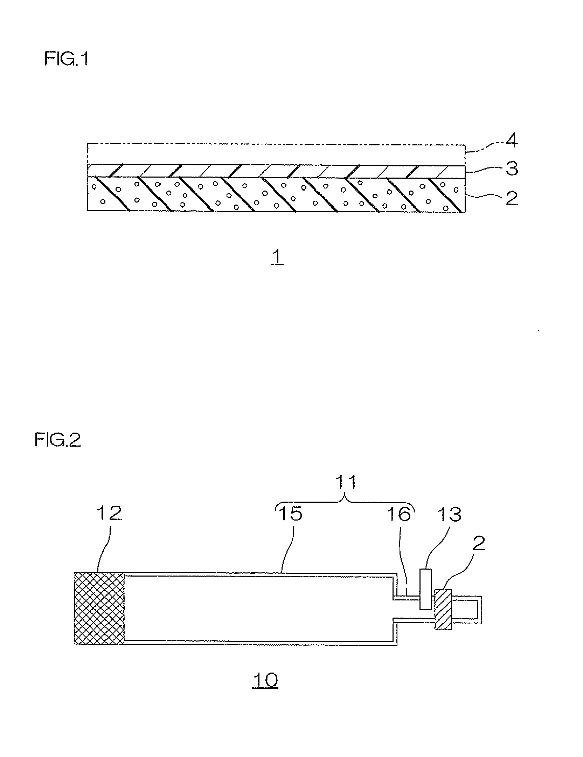

FIG. 1 shows a schematic configuration view for illustrating one embodiment of an EPDM foamed material of the present invention.

As shown in FIG. 1, a sealing material 1 includes an EPDM foamed material 2 and a pressure-sensitive adhesive layer 3 that is laminated on the EPDM foamed material 2 (and furthermore, a separator 4 that is laminated on the pressure-sensitive adhesive layer 3 as required (ref: a phantom line)).

A method for laminating the pressure-sensitive adhesive layer 3 on the EPDM foamed material 2 is not particularly limited and the pressure-sensitive adhesive layer 3 can be attached to the EPDM foamed material 2 using a known method. For example, first, the EPDM foamed material 2 is produced by the above-described method, so that a foamed material layer 2 prepared from the EPDM foamed material 2 is obtained. Next, the pressure-sensitive adhesive layer 3 is laminated on the surface of the foamed material layer 2 by a known method. In this way, the sealing material 1 is obtained as a pressure-sensitive adhesive sealing material.

The pressure-sensitive adhesive layer 3 is, for example, formed from a pressure-sensitive adhesive in a layered state by a known method.

Examples of the pressure-sensitive adhesive include an acrylic pressure-sensitive adhesive, a rubber pressure-sensitive adhesive, a silicone pressure-sensitive adhesive, a polyester pressure-sensitive adhesive, a urethane pressure-sensitive adhesive, a polyamide pressure-sensitive adhesive, an epoxy pressure-sensitive adhesive, a vinyl alkyl ether pressure-sensitive adhesive, and a fluorine pressure-sensitive adhesive. In addition to these, an example of the pressure-sensitive adhesive also includes a hot melt pressure-sensitive adhesive.

These pressure-sensitive adhesives can be used alone or in combination of two or more.

As the pressure-sensitive adhesive, preferably, an acrylic pressure-sensitive adhesive and a rubber pressure-sensitive adhesive are used.

An example of the acrylic pressure-sensitive adhesive includes a pressure-sensitive adhesive mainly composed of an alkyl (meth)acrylate. The acrylic pressure-sensitive adhesive can be obtained by a known method.

The rubber pressure-sensitive adhesive can be obtained from, for example, a natural rubber and/or a synthetic rubber by a known method. To be specific, examples of a rubber include a polyisobutylene rubber, a polyisoprene rubber, a chloroprene rubber, a butyl rubber, and a nitrile butyl rubber.

A form of the pressure-sensitive adhesive is not particularly limited and various forms such as an emulsion-based pressure-sensitive adhesive, a solvent-based pressure-sensitive adhesive, an oligomer-based pressure-sensitive adhesive, or a solid pressure-sensitive adhesive can be used.

The pressure-sensitive adhesive layer 3 has a thickness of, for example, 10 µm or more, or preferably 50 µm or more, and of, for example, 14440 µm or less, or preferably 5000 µm or less.

The sealing material 1 includes the EPDM foamed material 2, so that it has excellent sealing properties and metal corrosion resistance. Also, the sealing material 1 includes the pressure-sensitive adhesive layer 3, so that the EPDM foamed material 2 is capable of being attached to an arbitrary place. As a result, according to the sealing material 1, a gap between arbitrary members is capable of being excellently sealed by the EPDM foamed material 2 without metal corrosion.

In the description in FIG. 1, the pressure-sensitive adhesive layer 3 is formed as a substrateless-type pressure-sensitive adhesive tape or sheet that is formed from the pressure-sensitive adhesive only. Alternatively, for example, though not shown, the pressure-sensitive adhesive layer 3 can be also formed as a substrate-including pressure-sensitive adhesive tape or sheet that is formed from the pressure-sensitive adhesive layer 3 and a substrate.

In such a case, the pressure-sensitive adhesive layer 3 is, for example, formed as a laminated pressure-sensitive adhesive tape or sheet in which the pressure-sensitive adhesive layer 3 is provided on at least one surface of the substrate, which is not shown, or preferably is provided on both surfaces of the substrate (a laminate tape or sheet in which the pressure-sensitive adhesive layer 3, a substrate, and the pressure-sensitive adhesive layer 3 are sequentially laminated).

The substrate (not shown) is not particularly limited and examples thereof include a plastic substrate such as a plastic film or sheet; a paper-based substrate such as paper; a fiber-based substrate such as a fabric, a non-woven fabric, and a net; a metal substrate such as a metal foil and a metal plate; a rubber substrate such as a rubber sheet; a foamed substrate such as a foamed sheet; and furthermore, a laminate thereof.

A method for forming the pressure-sensitive adhesive layer 3 as a substrate-including pressure-sensitive adhesive tape or sheet is not particularly limited and a known method can be used.

In addition, in the description in FIG. 1, the pressure-sensitive adhesive layer 3 is provided on one surface (the top surface) only of the EPDM foamed material 2. Alternatively, for example, the pressure-sensitive adhesive layer 3 can be also provided on both surfaces (the top surface and the back surface) of the EPDM foamed material 2.

According to the pressure-sensitive adhesive sealing material 1, the pressure-sensitive adhesive layer 3 is provided on both surfaces of the EPDM foamed material 2, so that the sealing material 1 (the EPDM foamed material 2) is capable of being further surely fixed to a gap between the members by the two pressure-sensitive adhesive layers 3 and thus, the gap between the members is capable of being further surely sealed.

A separator (a release paper) can be attached to the surface (the surface that is the opposite side with respect to the back surface on which a foamed material layer is laminated) of the pressure-sensitive adhesive layer as required until it is practically used.

The sealing material 1 is attached to a member, among all, a member in which the temperature is to be increased, by the pressure-sensitive adhesive force of the pressure-sensitive adhesive layer 3, so that a gap between the members is capable of being sealed by the EPDM foamed material 2.

The sealing material 1 includes the above-described EPDM foamed material 2, so that it has excellent heat resistance and the EPDM foamed material 2 is capable of being surely brought into tight contact with a member and thus, a gap between the members is capable of being surely filled.

### Examples

While the present invention will be described hereinafter in further detail with reference to Examples and Comparative Examples, the present invention is not limited to these Examples and Comparative Examples.

Examples 1 to 10 and Comparative Examples 1 to 5

### (1) Production of EPDM Foamed Material

An EPDM, a filler, a softener, a flame retardant, and an oxidation inhibitor were blended at a mixing amount described in the mixing formulation shown in Table 1 to be kneaded with a 3L pressurizing kneader, so that a first kneaded material was obtained.

Separately, a cross-linking agent, a cross-linking auxiliary, a foaming agent, a foaming auxiliary, and a cross-linking retardant (Comparative Examples 3 and 4 only) were blended to be blended into the first kneaded material and then, the obtained mixture was kneaded with a 10-inch mixing roll to obtain a rubber composition (a second kneaded material) (a kneading step).

Next, the rubber composition was extruded into a sheet shape having a thickness of about 8 mm using a single screw extruder (45 mmφ), so that a rubber composition sheet was fabricated (a molding step).

Subsequently, the rubber composition sheet was preheated at 140°C for 20 minutes with an oven with internal air circulation. Thereafter, the temperature of the oven with internal air circulation was increased to 170°C over 10 minutes, so that the rubber composition sheet was heated at 170°C for 10 minutes to be foamed (a foaming step) and in this way, an EPDM foamed material was produced.

In Comparative Examples 1, 2, and 5, the foaming was defective, so that an EPDM foamed material was not capable of being obtained.

**Table 1**

| Table 1 | | | | | | | | | | | | | | | | |
|---|---|---|---|---|---|---|---|---|---|---|---|---|---|---|---|---|
| EX. Comp. Ex. | | Ex. 1 | Ex. 2 | Ex. 3 | Ex. 4 | Ex. 5 | Ex. 6 | Ex. 7 | Ex. 8 | Ex. 9 | Ex. 10 | Comp.Ex. 1 | Comp.Ex. 2 | Comp.Ex. 3 | Comp.Ex. 4 | Comp. Ex 5 |
| Polymer | EPDM | 100 | 100 | 100 | 100 | 100 | 100 | 100 | 100 | 100 | 100 | 100 | 100 | 100 | 100 | 100 |
| Feller | Carbon Black | 10 | 10 | 10 | 10 | 10 | 10 | 10 | 10 | 10 | 10 | 10 | 10 | 10 | 10 | 10 |
| | Heavy Calcium Carbonate | 200 | 200 | 200 | 200 | 200 | 200 | 200 | 200 | 200 | 200 | 200 | 200 | 150 | 100 | 200 |
| Softener | Asphalt | - | - | - | - | - | - | - | - | - | - | - | - | - | 50 | - |
| | Paraffinic Oil | 40 | 40 | 40 | 40 | 40 | 40 | 40 | 40 | 40 | 40 | 40 | 40 | 40 | 40 | 40 |
| Flame Retardant | Aluminium Hydroxide | - | - | - | - | - | - | - | - | - | - | - | - | 30 | - | - |
| Oxidation Inhibitor | 4,4'-bis(α,α-dimethylbenzyl)diphenylamine | - | - | - | 1.5 | 1.5 | - | - | - | - | - | - | - | - | - | - |
| | N,N'-di-2-naphthyl-p-phenylenediamine | - | - | - | 1.0 | 1.0 | - | - | - | - | - | - | - | - | - | - |
| Gross-Lining Agent | Sulfur S₈ | - | - | - | - | - | - | - | - | - | - | - | - | 1.2 | 1.0 | - |
| | Tetrabenzylthiuram Disulfide | 4.0 | 4.0 | 4.0 | 4.0 | 4.0 | 2.0 | 1.0 | 4.0 | 4.0 | 15.0 | - | 25.0 | - | - | 20.0 |
| | p,p'-dibenzoylquinonedioxime | - | - | 2.0 | - | 2.0 | - | - | 0.05 | 10.0 | - | - | - | - | - | - |
| Gross-Linking Auxiliary | Zinc Oxide | 5 | 5 | 5 | 5 | 5 | 5 | 5 | 5 | 5 | 5 | 5 | 5 | 5 | 5 | 5 |
| | Stearic Acid | 3 | 3 | 3 | 3 | 3 | 3 | 3 | 3 | 3 | 3 | 3 | 3 | 3 | 3 | 3 |
| Crossi-Linking Accelerator | N,N'-diethythiourea | 1.5 | - | 2.0 | 2.0 | 2.0 | 1.0 | 1.0 | 1.0 | 1.0 | 1.0 | - | 2.0 | - | - | 1.0 |
| | N,N'-dibutylthiourea | - | 2.0 | - | - | - | - | - | - | - | - | - | - | 1.5 | - | - |
| Foaming Agent | Azodicarbonamide | 20.0 | 20.0 | 20.0 | 20.0 | 20.0 | 10.0 | 10.0 | 20.0 | 20.0 | 20.0 | 20.0 | 20.0 | 15.0 | 20.0 | 20.0 |
| Foaming Auxiliary | Urea-Based | 5.0 | 5.0 | 5.0 | 5.0 | 5.0 | 2.5 | 2.5 | 5.0 | 5.0 | 5.0 | 5.0 | 5.0 | 10.0 | 10.0 | 5.0 |
| Cross-Linking Retardant | Zinc Dimethyldithiocarbamate | - | - | - | - | - | - | - | - | - | - | - | - | 1.0 | 4,0 | - |
| | Zinc Diethyldithiocarbamate | - | - | - | - | - | - | - | - | - | - | - | - | 1.0 | - | - |
| | 2-Mercaptobenzothiazole | - | - | - | - | - | - | - | - | - | - | - | - | 1.2 | 1.0 | - |

In Table 1, values show number of blended parts in each of the components.

For the abbreviations shown in Table 1, the details are given in the following.
EPDM: EPT8030M, containing long chain branching, content of diene (5-ethylidene-2-norbomene) of 9.5 mass %, catalyst: a metallocene catalyst, manufactured by Mitsui Chemicals, Inc.
Carbon Black: Asahi #50, an average particle size of 80 µm, manufactured by ASAHI CARBON CO., LTD.
Heavy Calcium Carbonate: manufactured by MARUO CALCIUM CO., LTD.
Asphalt: Trumbull Base Asphalt 4402, manufactured by Owens Coming Sales, LLC.
Paraffinic Oil: Diana Process Oil PW-380, manufactured by Idemitsu Kosan Co., Ltd.
Aluminum Hydroxide: HIGILITE H-32, an average particle size of 5 to 10 µm, manufactured by SHOWA DENKO K.K.
4,4'-bis(α,α-dimethylbenzyl)diphenylamine: NOCRAC CD, aromatic secondary amine-based, manufactured by OUCHI SHINKO CHEMICAL INDUSTRIAL CO., LTD.
N,N'-di-2-naphthyl-p-phenylenediamine: NOCRAC White, aromatic secondary amine-based, manufactured by OUCHI SHINKO CHEMICAL INDUSTRIAL CO., LTD.
Sulfur S₈: ALPHAGRAN S-50EN, manufactured by Touchi Co., Ltd.
Tetrabenzylthiuram Disulfide: NOCCELER TBZTD, a thiuram compound, manufactured by OUCHI SHINKO CHEMICAL INDUSTRIAL CO., LTD.
p,p'-dibenzoylquinonedioxime: VULNOC DGM, a quinoid compound, manufactured by OUCHI SHINKO CHEMICAL INDUSTRIAL CO., LTD.
Zinc Oxide: second-class zinc oxide, manufactured by MITSUI MINING & SMELTING CO., LTD.
Stearic Acid: stearic acid powder "Sakura", manufactured by NOF CORPORATION
N,N'-diethylthiourea: NOCCELER EUR, thiourea-based, manufactured by OUCHI SHINKO CHEMICAL INDUSTRIAL CO., LTD.
N,N'-dibutylthiourea: NOCCELER BUR, thiourea-based, manufactured by OUCHI SHINKO CHEMICAL INDUSTRIAL CO., LTD.
Azodicarbonamide: AC#LQ, manufactured by EIWA CHEMICAL IND. CO., LTD.
Urea-Based: CELLPASTE K5, manufactured by EIWA CHEMICAL IND. CO., LTD.
Zinc Dimethyldithiocarbamate: NOCCELER PZ, dithiocarbamates, manufactured by OUCHI SHINKO CHEMICAL INDUSTRIAL CO., LTD.
Zinc Diethyldithiocarbamate: NOCCELER EZ, dithiocarbamates, manufactured by OUCHI SHINKO CHEMICAL INDUSTRIAL CO., LTD.
2-Mercaptobenzothiazole: NOCCELER M, thiazoles, manufactured by OUCHI SHINKO CHEMICAL INDUSTRIAL CO., LTD.

### (2) Measurement of Properties

The properties of each of the EPDM foamed materials in Examples 1 to 10 and Comparative Examples 3 and 4 were measured by a method shown in the following. The results are shown in Table 2.

<80 % Compressive Load Value CL1>

An 80 % compressive load value CL1 of each of the EPDM foamed materials was measured in conformity with JIS K 6767 (1999). To be specific, a skin layer of the EPDM foamed material was removed and a test piece having a thickness of about 10 mm was prepared. Thereafter, the test piece was compressed by 80 % at a compression rate of 10 mm/min using a compression testing machine to measure the 80 % compressive load value CL1 after 10 seconds of compression.

<Apparent Density BD1>

An apparent density BD1 of each of the EPDM foamed materials was measured in conformity with JIS K 6767 (1999). To be specific, a skin layer of the EPDM foamed material was removed and a test piece having a thickness of about 10 mm was prepared. Thereafter, the mass was measured to calculate the mass (the apparent density BD1) per unit volume.

<Elongation E1 and Tensile Strength HT1>

An elongation E1 and a tensile strength (a breaking elongation) HT1 of each of the EPDM foamed materials were measured in conformity with JIS K 6767 (1999). To be specific, a skin layer of the EPDM foamed material was removed and a test piece having a thickness of about 10 mm was prepared. Thereafter, the test piece was stamped out using a dumbbell No. 1 to obtain a sample for measurement. The sample for measurement was pulled with a tensile testing machine at a tension rate of 500 mm/min to measure the elongation (the breaking elongation) E1 and the load (the tensile strength) HT1 of the sample for measurement at the time of being cut in a dumbbell shaped parallel portion.

<Average Cell Size CS>

An enlarged image of a bubble portion in each of the EPDM foamed materials was obtained with a digital microscope (VH-8000, manufactured by KEYENCE CORPORATION) and the obtained image was analyzed using an image analysis software (Win ROOF, manufactured by MITANI CORPORATION), so that an average cell size CS (µm) of the EPDM foamed material was obtained.

<Sound Absorbency (Peak Value of Sound Absorption Coefficient at Normal Incidence)>

FIG. 2 shows a schematic sectional view for illustrating an evaluation method of sound absorbency.

A peak value (%) of the sound absorption coefficient at normal incidence of each of the EPDM foamed materials was measured in conformity with "Acoustics-Determination of sound absorption coefficient-Part 1: Method using standing wave ratio (JIS A 1405-1: 1996)" using a 4206-T-type acoustic tube (manufactured by Bruel & Kjaer Sound & Vibration Measurement A/S.) 10 and a measurement software (PULSE Material Testing Type 7758, manufactured by Bruel & Kjaer Sound & Vibration Measurement A/S.)

That is, the T-type acoustic tube 10 is provided with an acoustic tube 11, a sound source portion (speaker) 12 provided at one (left) end portion of the acoustic tube 11, and a microphone 13 provided at the other (right) side of the acoustic tube 11.

The acoustic tube 11 is made of a straight tube extending in the right-left direction and integrally includes a large-diameter tube 15 that is disposed at the left side and a small-diameter tube 16 that is connected to the right side of the large-diameter tube 15. The small-diameter tube 16 is formed into a straight tube shape, has an axis line that is common to the axis line of the large-diameter tube 15, and has an inner diameter that is smaller than that of the large-diameter tube 15. The right end portion of the small-diameter tube 16 is occluded.

The microphone 13 is disposed at the center in the right-left direction of the small-diameter tube 16 and is connected to a measurement software, which is not shown.

And, the EPDM foamed material 2 that was cut into a piece having a diameter of 29 mm × a thickness of 10 mm was disposed near the right side of the microphone 13 so as to occlude the inside of the small-diameter tube 16 and so that the thickness direction of the EPDM foamed material 2 was along the right-left direction.

Then, a sound wave having a frequency of 1500 Hz was emitted from the sound source portion 12 and the sound absorption coefficient at normal incidence (%) was measured with the microphone 13 and the measurement software.

<Heat Resistance (Rate of Change R)>

Each of the EPDM foamed materials was heated at 150°C for 10 days. Each rate of change R thereof before and after the heating, that is, the rate of change R_{CL} of the 80 % compressive load value, the rate of change R_{BD} of the apparent density, the rate of change R_{E} of the elongation, the rate of change R_{HT} of the tensile strength, and the rate of change R_{CS} of the average cell size were obtained, respectively, so that the heat resistance of the EPDM foamed material was evaluated.

The EPDM after being heated at 150°C for 10 days in Comparative Example 4 was severely deteriorated, so that the elongation R₂ and the tensile strength HT₂ were not capable of being measured. Thus, the rate of change R_{E} of the elongation and the rate of change R_{HT} of the tensile strength were not capable of being obtained.

<Corrosive Properties of Silver>

0.5 g of the EPDM foamed material was put into 100 mL of a sealed tube. Polished and cleansed silver was attached to the bottom surface of the sealed tube and the inner side surface of a lid, respectively. The resulting product was put into a thermostatic chamber at 85°C for 148 hours and a presence or absence of corrosion at the bottom surface (the back surface) of the sealed tube and the inner side surface (the surface that was opposed to the bottom surface of the sealed tube) of the lid was checked. When corrosion was not confirmed, the result was evaluated as "Absence". When the corrosion was canfirmed, the result was evaluated as "Presence".

<Content Proportion of Sulfur Atom S (Fluorescent X-Ray Measurement>

Each of the EPDM foamed materials was cut into pieces each having an appropriate size. Four pieces thereof were stacked and were subjected to a fluorescent X-ray measurement (XRF). A device and conditions for the XRF were shown in the following.

XRF device: manufactured by Rigaku Corporation, ZXS100e

X-ray source: vertical Rh tube

Analysis area: 30 mmφ

Analysis range of elements: B to U

In addition, the quantification was calculated from the proportion of the total atoms that were detected.

Table 2

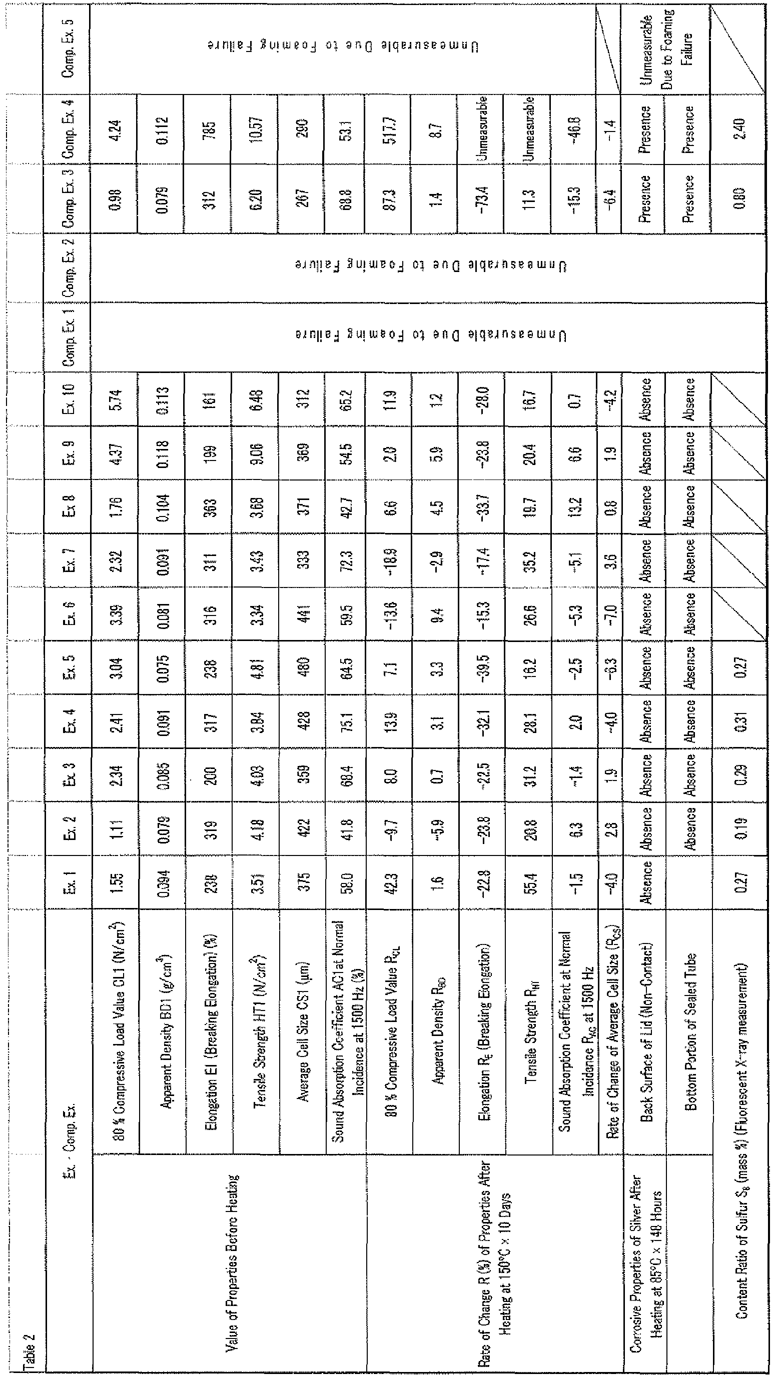

## Claims

1. An ethylene-propylene-diene rubber foamed material obtained by foaming a rubber composition containing an ethylene-propylene-diene rubber, wherein
a rate of change of an 80 % compressive load value CL2 after being heated at 150°C for 10 days to an 80 % compressive load value CL1 before being heated is -50 % or more and 50 % or less and
the 80 % compressive load value CL1 before being heated is 0.5 N/cm² or more and 10 N/cm² or less.

2. The ethylene-propylene-diene rubber foamed material according to claim 1, wherein
the content of sulfur calculated by a fluorescent X-ray measurement is 0.7 mass % or less.

3. The ethylene-propylene-diene rubber foamed material according to claim 1, wherein
the apparent density thereof before being heated is 0.50 g/cm³ or less.

4. The ethylene-propylene-diene rubber foamed material according to claim 1, wherein
the rubber composition contains a cross-linking agent and
the cross-linking agent does not contain sulfur Sg and contains a thiuram compound.

5. The ethylene-propylene-diene rubber foamed material according to claim 4, wherein
the mixing ratio of the thiuram compound with respect to 100 parts by mass of the ethylene-propylene-diene rubber is 0.05 parts by mass or more and less than 20 parts by mass.

6. The ethylene-propylene-diene rubber foamed material according to claim 4, wherein
the cross-linking agent further contains a quinoid compound.

7. The ethylene-propylene-diene rubber foamed material according to claim 6, wherein
the quinoid compound is p,p'-dibenzoylquinonedioxime.

8. The ethylene-propylene-diene rubber foamed material according to claim 7, wherein
the mixing ratio of the p,p'-dibenzoylquinonedioxime with respect to 100 parts by mass of the ethylene-propylene-diene rubber is 0.05 parts by mass or more and 10 parts by mass or less.

9. A sealing material comprising:
an ethylene-propylene-diene rubber foamed material and
a pressure-sensitive adhesive layer provided on one surface or both surfaces of the ethylene-propylene-diene rubber foamed material, wherein
the ethylene-propylene-diene rubber foamed material is obtained by foaming a rubber composition containing an ethylene-propylene-diene rubber, wherein
a rate of change of an 80 % compressive load value CL2 after being heated at 150°C for 10 days to an 80 % compressive load value CL1 before being heated is -50 % or more and 50 % or less and
the 80 % compressive load value CL1 before being heated is 0.5 N/cm² or more and 10 N/cm² or less.
